# EUROPÄISCHE PATENTSCHRIFT

(11) **EP 1 674 841 B1**
(45) Veröffentlichungstag und Bekanntmachung des Hinweises auf die Patenterteilung: **17.10.2007**
(21) Anmeldenummer: 04106970.9
(22) Anmeldetag: 23.12.2004
(51) Int. Cl.: G01G 23/01

(54) **Kalibriergewichtsanordnung für eine elektronische Waage**
Calibrating apparatus for an electronic balance
Dispositif de calibrage pour une balance électronique

(43) Veröffentlichungstag der Anmeldung: 28.06.2006
(73) Patentinhaber: Mettler-Toledo AG, 8606 Greifensee (CH)
(72) Erfinder: Genoud, Dominique, 8610, Uster (CH); Latzer, Christoph, 8330, Pfäffikon (CH)

(56) Entgegenhaltungen:
- EP-A- 0 468 159
- EP-A- 0 955 530
- DE-A1- 19 509 177
- US-A1- 2004 068 985
- US-B1- 6 574 958
- PATENT ABSTRACTS OF JAPAN Bd. 008, Nr. 204 (P-301), 18. September 1984 (1984-09-18) & JP 59 090031 A (SUMITOMO GOMU KOGYO KK), 24. Mai 1984 (1984-05-24)

## Beschreibung

Die Erfindung betrifft eine Kalibriergewichtsanordnung für eine elektronische Waage und insbesondere einen Antrieb für eine Kalibriergewichtsanordnung.

Elektronische Waagen werden häufig mittels eines internen Kalibriergewichts kalibriert. Für eine Kalibrierung wird ein Kalibriergewicht mit einer definierten Masse in Kraftkontakt mit der in einer Kraftmesszelle einer Waage angeordneten Kraftübertragungsvorrichtung gebracht und dann ein Referenzwert ermittelt. Anhand dieses Referenzwerts können weitere Wägeparameter der Waage angeglichen werden. Nach erfolgreicher Kalibrierung wird der Kontakt zwischen dem Kalibriergewicht und der Kraftübertragungsvorrichtung wieder gelöst und das Kalibriergewicht in einer Ruheposition arretiert. Das Kalibriergewicht wird dabei durch einen Transfermechanismus aus einer Ruheposition in eine Kalibrierposition und zurück bewegt, wobei der Transfermechanismus mindestens ein Hebeelement und einen Antrieb umfasst. In der Kalibrierposition steht das Kalibriergewicht in Kraftkontakt mit der Kraftübertragungsvorrichtung, in der Ruheposition besteht kein Kraftkontakt.

Es sind verschiedene Arten von Hebeelementen und Ausführungen von Kalibriergewichtsanordnungen bekannt.

In der EP 0 468 159 B1 wird ein Kalibriergewicht offenbart, welches über paarweise horizontal gegeneinander verschiebbare Keile vertikal bewegt und so in Kraftkontakt mit der Kraftübertragungsvorrichtung der Waage gebracht wird. Der Antrieb dieses Hebelements erfolgt über eine mit den Keilen verbundene Spindel und einen motorischen Antrieb.

Ein ebenfalls vertikales Anheben bzw. Absenken erfährt ein Kalibriergewicht durch eine in der EP 0 955 530 A1 beschriebene Vorrichtung. Das Gewicht ruht auf einer Auflage, welche durch einen elektrisch angetriebenes Hebeelement bewegt wird.

In der DE 203 18 788 U1 wird beschrieben, wie ein einstückiges Kalibriergewicht durch ein rampenartiges Hebeelement angehoben und abgesenkt wird, wobei das durch einen linearen Antrieb angetriebene Hebeelement eine Art schräge Parallelbewegung ausführt.

Bei vielen Waagen sind die Kalibriergewichtsanordnung und die Kraftübertragungsvorrichtung hintereinander angeordnet, wie es in der EP 0 955 530 A1 offenbart ist. Das Kalibriergewicht kann aber auch in beispielsweise zwei Kalibriergewichte aufgeteilt und seitlich an der Kraftübertragungsvorrichtung befestigt sein, wie die in der EP 0 789 232 B1 offenbarten kreiszylindrischen Kalibriergewichte. Die beiden identischen Gewichte sind an zwei gegenüberliegenden Seiten der Kraftübertragungsvorrichtung angeordnet. Es werden zwei unterschiedliche Mechanismen zur Bewegung der Kalibriergewichte beschrieben. Im ersten Fall ruht das einen Führungsstift aufweisende Kalibriergewicht auf einer als Träger ausgestalteten Kalibriergewichtsauflage und wird zur Kalibrierung durch Abkippen der einseitig gelagerten Kalibriergewichtsauflage auf zwei darunter liegende, mit der Kraftübertragungsvorrichtung verbundene, als Stangen oder Hebel gestaltete Kalibriergewichtsträger abgesenkt. In einer zweiten Variante liegt das Gewicht in seiner Ruheposition auf einer zwischen den mit der Kraftübertragungsvorrichtung verbundenen Kalibriergewichtsträgern angeordneten Kalibriergewichtsauflage. Durch eine vertikale Abwärtsbewegung der Kalibriergewichtsauflage wird das Kalibriergewicht zur Kalibrierung in Kontakt mit den Kalibriergewichtsträgern gebracht.

Angetrieben werden die erwähnten Hebeelemente im Allgemeinen durch kleine Servomotoren. Nachteilig an der Verwendung von Servomotoren ist, dass ein solcher vergleichsweise viel Platz in der Kraftmesszelle der Waage benötigt, wodurch sowohl die Kraftmesszelle als auch die Waage selbst unnötig vergrössert wird.

Gerade bei hochempfindlichen elektronischen Waagen wird das Wägeergebnis durch elektrostatische Aufladung und Wechselwirkungen beeinflusst und sogar verändert. Die für den Antrieb der Transfermechanismen verwendeten Servomotoren enthalten elektrisch nicht leitende Getriebeteile, welche im Betrieb über Reibung elektrostatische Felder erzeugen. Die entstehenden elektrostatischen Felder, jedoch auch elektromagnetische Felder reichen aus, um das Wägeergebnis, insbesondere von hochempfindlichen Waagen zu beeinflussen.

Eine alternative Kraftquelle im Zusammenhang mit einer Waage zeigt die JP 59090031. Die Schrift offenbart die Verwendung einer Formgedächtnislegierung (eng. shape memory alloy; SMA) in Zusammenhang mit einer Waage zur Bestimmung des Volumens und des spezifischen Gewichts einer Probe. Die Formgedächtnislegierung wird als spiralförmig gewickelter Draht an beiden Enden mit einem Haken verbunden. Der obere Haken wird mit einer Waage verbunden und die Probe am unteren Haken eingehängt. Zunächst wird das Gewicht der Probe in Luft gemessen. Anschliessend wird der SMA-Draht mit infraroter Strahlung bestrahlt und dadurch indirekt erwärmt. Die Erwärmung verursacht ein axiales Zusammenziehen des SMA-Materials und bewirkt, dass sich die Probe, welche während des gesamten Vorgangs am Haken befestigt ist, in ein bereitstehendes Wasserbad absenkt, worauf das Gewicht der Probe unter Wasser bestimmt wird.

Die Formgedächtnislegierung wird in diesem Fall in Form einer in ihrer Länge veränderlichen Spiralfeder als Verlängerung bzw. als Ersatz der Waagschale eingesetzt. Diese Feder hängt frei an der Waage, welche oberhalb der Feder und des Wasserbades angeordnet ist. Die Bewegung der Feder wird nicht geführt. Das bedeutet, dass die Probe sich also beliebig drehen, kippen oder pendeln kann. Entscheidend für derartige Messungen ist, dass die Probe vollständig in die Flüssigkeit eintaucht, die Geschwindigkeit ist dabei unerheblich, solange die Flüssigkeit nicht aus dem Gefäss austritt.

Die bekannten Kalibriergewichtsanordnungen weisen fast immer relativ grosse Antriebe auf. Eine Verbesserung der Kalibriergewichtsanordnung erfordert somit insbesondere eine Optimierung und Miniaturisierung des Antriebs des Transfermechanismus. Der Antrieb muss sehr klein, kompakt und flexibel einsetzbar sein.

Gelöst wird diese Aufgabe durch eine Kalibriergewichtsanordnung mit den Merkmalen gemäss Anspruch 1. Die Kalibriergewichtsanordnung für eine eine Kraftübertragungsvorrichtung umfassende elektronische Waage weist mindestens ein mit der Kraftübertragungsvorrichtung der Waage koppelbares Kalibriergewicht sowie einen Transfermechanismus und einen Antrieb zur geführten Bewegung des Kalibriergewichts auf. Der Antrieb wirkt mit dem Transfermechanismus zusammen und weist einen zumindest teilweise aus einer Formgedächtnislegierung bestehenden Aktuator auf, welcher das Kalibriergewicht mittels einer durch eine Temperaturänderung hervorgerufenen Änderung der inneren Struktur bzw. der Kristallstruktur der Formgedächtnislegierung bewegt.

Formgedächtnislegierungen weisen zwei sehr charakteristische Eigenschaften auf. Sie sind pseudoelastisch und zeigen einen Formgedächtniseffekt. Diese Eigenschaften hängen mit einem den Formgedächtnislegierungen eigenen Festkörperphasenübergang, also einer molekularen Umordnung, zusammen. Bei den meisten Formgedächtnislegierungen reichen im Bereich der Phasenübergangstemperatur Temperaturänderungen von ca. 10 °C aus, um die Phasenumwandlung einzuleiten. Bei Temperaturen unterhalb der Phasenübergangstemperatur liegt die Formgedächtnislegierung in ihrer Martensitphase vor. Diese Phase zeichnet sich dadurch aus, dass das Material relativ weich und formbar ist. Bei Temperaturen oberhalb der Phasenübergangstemperatur befindet sich die Formgedächtnislegierung in ihrer Austenitphase, in der das Material fester ist.

Formgedächtnislegierungen weisen in Abhängigkeit der Temperatur und/oder der auf sie einwirkenden mechanischen Kräfte unterschiedliche physikalische Eigenschaften auf.

Der Formgedächtniseffekt wird beobachtet, wenn die Temperatur eines Gegenstands aus einer Formgedächtnislegierung unter dessen Phasenübergangstemperatur abgesenkt wird. Der Gegenstand befindet sich dann in der formbaren Martensitphase und kann leicht verformt werden. Wird die Temperatur des Gegenstands wieder über die Phasenübergangstemperatur hinaus erhöht, so transformiert das Material in seine Austenitphase und nimmt dabei wieder seine ursprüngliche Gestalt an.

Weiterhin zeigen Formgedächtnislegierungen eine so genannte Pseudoelastizität. Diese tritt auf, wenn die Legierung sich vollständig in der Austenitphase befindet, ihre Temperatur also oberhalb der Phasenübergangstemperatur liegt. Pseudoelastizität ist ein isothermer Effekt, welcher ohne Temperaturänderung auftritt. Wird beispielsweise eine ausreichende Kraft auf einen Gegenstand aus einer Formgedächtnislegierung ausgeübt, so transformiert diese von ihrer Austenitin ihre Martensitphase. Die Kraft wird von dem formbareren Martensit aufgenommen, der Gegenstand verformt sich. Lässt die Kraft jedoch wieder nach, so wandelt sich der Gegenstand wieder in seine ursprüngliche Gestalt in der Austenitphase zurück.

Der durch eine Temperaturerhöhung ausgelöste Phasenübergang setzt eine Energie frei, welche beispielsweise für einen Antrieb genutzt werden kann. Eine Temperaturerhöhung kann leicht durch eine mit der Formgedächtnislegierung in Kontakt stehende elektrische Heizvorrichtung hervorgerufen werden, wie beispielsweise einen IR-Strahler, eine Heizwendel, einen Warmluftstrom oder eine Stromquelle. Vorzugsweise wird als Heizvorrichtung eine Stromquelle eingesetzt. Diese hat neben der Tatsache, dass sie sehr klein und kompakt gestaltet und einfach und präzise über die Elektronik der Waage angesteuert werden kann, vor allem den Vorteil, dass eine solche Stromquelle keine zusätzliche Wärme produziert, welche das Wägeergebnis beeinflussen würde.

Der Phasenübergang erfolgt über einen gewissen Temperaturbereich, der in Abhängigkeit der verwendeten Formgedächtnislegierung variiert. Dieser Übergangstemperaturbereich ermöglicht es, die Formänderung oder die Verkürzung durch Halten der Temperatur auf einem bestimmten Wert anzuhalten bzw. über die Aufheizgeschwindigkeit teilweise auch die Geschwindigkeit der Formänderung zu bestimmen.

In Abhängigkeit der verwendeten Formgedächtnislegierung verkürzt sich beim Überschreiten seiner Phaseübergangstemperatur beispielsweise ein Draht aus einem derartigen Material um einen bestimmten Prozentsatz und ist dadurch in der Lage, eine Zugkraft auf einen an dem Draht befestigten Gegenstand auszuüben. Dieser Effekt wird dazu eingesetzt, eine Zugkraft auf den Transfermechanismus auszuüben und so dessen Verschiebung einzuleiten.

Die Gestaltung des Aktuators bestimmt die Grösse und Art der ausgeübten Kraft. Beispielsweise verkürzt sich ein aus einer Formgedächtnislegierung bestehender Draht, wenn seine Temperatur über die Phasen übergangstemperatur hinaus erhöht wird. Ein Draht aus einer Formgedächtnislegierung kann daher allein aufgrund einer Temperaturänderung eine Zugkraft auf einen daran befestigten Gegenstand bewirken. Die Ausgestaltung der Formgedächtnislegierung als Draht ist daher besonders bevorzugt, da dieser sich einfach und schnell erwärmen lässt und bereits an der Luft ohne zusätzliche Kühlvorrichtungen rasch abkühlt. Die Formgedächtnislegierung wird nur während der Kalibrierung beheizt. Zusammen mit der Ausgestaltung als Draht wird die Kraftmesszelle und damit auch das Wägeergebnis kaum elektrostatisch beeinflusst.

Der zumindest teilweise aus einer Formgedächtnislegierung bestehende Aktuator stellt nicht nur einen Teil des Antriebs dar, sondern kann auch als Sensor zur Positionskontrolle eingesetzt werden. Ist die Formgedächtnislegierung als Draht ausgestaltet, so weist dieser in der Martensitphase und in der Austenitphase unterschiedliche elektrische Widerstände auf. Über eine Widerstandsmessung des Drahtes kann daher ermittelt werden, in welcher Phase sich die Formgedächtnislegierung befindet und damit auch ob der Draht verkürzt ist bzw. ob eine Zugkraft auf den Transfermechanismus einwirkt. In Bezug auf die Kompaktheit der Kalibriergewichtsanordnung, stellt dies einen weiteren Vorteil dar, da ein zusätzlicher Sensor zur Funktionskontrolle des Transfermechanismus eingespart wird.

Die Zugkraft des als Draht ausgestalteten Aktuators hängt mit seiner Verkürzung aufgrund eines durch Temperaturerhöhung verursachten Phasenübergangs zusammen. Um eine optimal auf die entsprechende Kalibriergewichtsanordnung und das Kalibriergewicht abgestimmte Zugkraft zu erreichen, muss die Länge des Drahtes auf den durch ihn zu überwindende Zugweg abgestimmt sein, da sich dessen Länge in Abhängigkeit der verwendeten Formgedächtnislegierung nur um einen bestimmten Prozentsatz ändert. Aufgrund der so vorbestimmten Länge des Drahts ist es unter Umständen vorteilhaft, diesen umzulenken, um eine möglichst hohe Kraftübertragung zu erwirken. Vorzugsweise wird die durch einen Phasenübergang freigesetzte Zugkraft des Drahtes daher über mindestens eine Rolle und/oder einen Hebel umgelenkt.

Weiterhin ermöglicht die Umlenkung um Hebel und/oder Rollen eine sehr raumsparende und flexible Anordnung des Drahts in der Kraftmesszelle der Waage.

Die Umlenkrollen bestehen vorzugsweise aus einem glatten, elektrisch und thermisch nicht leitendem Material, welches ein Gleiten des Drahts relativ zur Umlenkrolle ermöglicht, ohne dass der Draht selber abgerieben wird, die Rollen abgerieben werden oder der Draht sogar in die Rollen einschneidet. Besonders geeignete Materialien sind daher technische Kunststoffe und insbesondere Teflon.

Der Transfermechanismus der Kalibriergewichtsanordnung weist ein Rückstellelement und ein Hebeelement auf, wobei auch ein Element wie beispielsweise eine Feder die Funktion von Rückstellelement und Hebeelement zusammen erfüllen kann. Das Hebeelement bewirkt eine geführte Bewegung der Kalibriergewichtsauflage und damit auch des Kalibriergewichts, so dass das Kalibriergewicht im Falle einer Kalibrierung in Kraftkontakt mit der Kraftübertragungsvorrichtung einer Waage gebracht wird. Nach erfolgreicher Kalibrierung muss dieser Kraftkontakt wieder gelöst und der Transfermechanismus wieder in seine Ruheposition gebracht werden. Diese Aufgabe wird durch das Rückstellelement gelöst, welches eine ausreichend grosse Kraft aufbringt, um den Transfermechanismus wieder in seine Ruheposition zu bringen.

Eine weitere Aufgabe des Rückstellelements liegt darin, den erkaltenden, drahtförmigen Aktuator wieder auf seine ursprüngliche Länge zu dehnen. Sobald die Wärmezufuhr unterbrochen wird, fängt der Draht an abzukühlen. Unterschreitet die den Draht bildende Formgedächtnislegierung dann ihre Phasenübergangstemperatur, wird sie formbarer und der Draht nimmt seine ursprüngliche Form und Länge wieder an. Dieser Vorgang wird durch das Rückstellelement unterstützt und verstärkt.

Der Transfermechanismus kann verschiedene Arten von Hebeelemente umfassen. Vorzugsweise sind die Hebeelemente als sich paarweise gegeneinander verschiebenden Keile, Schraubendruckfedern oder als mindestens ein Kniegelenk ausgestaltet, wobei im Fall der Schraubendruckfedern diese gleichzeitig das Rückstellelement bilden können.

Für eine Kalibrierung wird das Kalibriergewicht in Kraftkontakt mit mindestens einem Kalibriergewichtsträger gebracht, welcher mit der Kraftübertragungsvorrichtung gekoppelt ist.

Die Formgedächtnislegierung, aus der zumindest Teile des Aktuator bestehen, weist eine Phasenübergangstemperatur von über 70°C, vorzugsweise von mehr als 80°C auf. Damit kann eine Waage mit einem zumindest teilweise aus einer Formgedächtnis legierung bestehenden Antrieb bei den für Waagen üblichen Temperaturen von -10 bis +70°C gelagert werden.

Formgedächtnislegierungen umfassen u. a. eine Gruppe bestehend aus NiTi₂, CuZn, CuZnAl, CuZnGa, CuZnSn, CuZnSi, CuAlNi, CuAuZn, CuSn, AuCd, AgCd, NiAl und FePt. Vorzugsweise wird eine Nickel-Titan-Legierung mit einem Nickel-Anteil von mindestens 40 % und vorzugsweise ca. 50 % gewählt. Diese Legierung weist eine Phasenübergangstemperatur von mindestens 90°C auf. Ein Draht aus dieser Legierung mit einem Durchmesser von etwa 150 µm verkürzt sich beim Überschreiten der Phasenübergangstemperatur um ca. 4 %.

Die Anordnung einer Kalibriergewichtsanordnung relativ zu der Kraftübertragungsvorrichtung einer elektronischen Waage sowie mehrere Ausführungsformen der Kalibriergewichtsanordnung sind in den Figuren dargestellt, welche im Folgenden beschrieben werden. Dabei wird der vorzugsweise drahtartig ausgebildete Aktuator aus einer Formgedächtnislegierung als SMA-Draht bezeichnet. Es zeigen:
- Fig. 1: eine schematische, vereinfachte Seitenansicht einer Kraftübertragungsvorrichtung einer elektronischen Waage mit verlängerten Kalibriergewichtsträgern und einer neben der Kraftübertragungsvorrichtung angeordneten Kalibriergewichtsanordnung mit einem eine Kalibriergewichtsachse aufweisenden Kalibriergewicht in ihrer Ruheposition;
- Fig. 2: eine schematische, vereinfachte Seitenansicht der Kraftübertragungsvorrichtung und Kalibriergewichtsanordnung von Figur 1 während der Kalibrierung;

- Fig. 3: eine perspektivische Darstellung einer Kalibriergewichtsanordnung mit einem über drei Rollen umgelenkten, als Draht ausgestalteten Aktuator aus einer Formgedächtnislegierung;
- Fig. 4: eine perspektivische Darstellung einer Kalibriergewichtsanordnung mit einem über eine Rolle umgelenkten, als Draht ausgestalteten Aktuator aus einer Formgedächtnislegierung;
- Fig. 5: eine vereinfachte, schematische Frontalansicht eines Transfermechanismus mit einem als Kniegelenk gestalteten Hebeelement, wobei die Gelenkachsen des Kniegelenks orthogonal zur Kalibriergewichtsachse angeordnet sind;
- Fig. 6: eine vereinfachte, schematische Seitenansicht eines Transfermechanismus mit einem als Kniegelenk gestalteten Hebeelement, wobei die Gelenkachsen des Kniegelenks parallel zur Kalibriergewichtsachse angeordnet;
- Fig. 7: eine vereinfachte, schematische Seitenansicht eines Transfermechanismus mit einem als Kniegelenk gestalteten Hebeelement, wobei die Gelenkachsen des Kniegelenks parallel zur Kalibriergewichtsachse angeordnet sind und ein Aktuator über einen Hebel umgelenkt wird;
- Fig. 8: eine vereinfachte schematische Frontalansicht eines Transfermechanismus mit einem als Federpaket gestalteten Hebeelement;
- Fig. 9: eine vereinfachte schematische Frontalansicht eines Transfermechanismus mit einem aus sich paarweise gegeneinander verschiebenden Keilen gestalteten Hebeelement;
- Fig. 10: eine vereinfachte, perspektivische Ansicht einer Kraftübertragungsvorrichtung mit einer seitlich daran angeordneten Kalibriergewichtsanordnung, welche ein Kalibriergewicht durch ein vertikales Absenken der Kalibriergewichtsauflage in Kraftkontakt mit der Kraftübertragungsvorrichtung bringt;
- Fig. 11: eine vereinfachte, perspektivische Ansicht einer Kraftübertragungsvorrichtung mit einer seitlich daran angeordneten Kalibriergewichtsanordnung, welche ein Kalibriergewicht durch eine Kippbewegung der Kalibriergewichtsauflage in Kraftkontakt mit der Kraftübertragungsvorrichtung bringt.

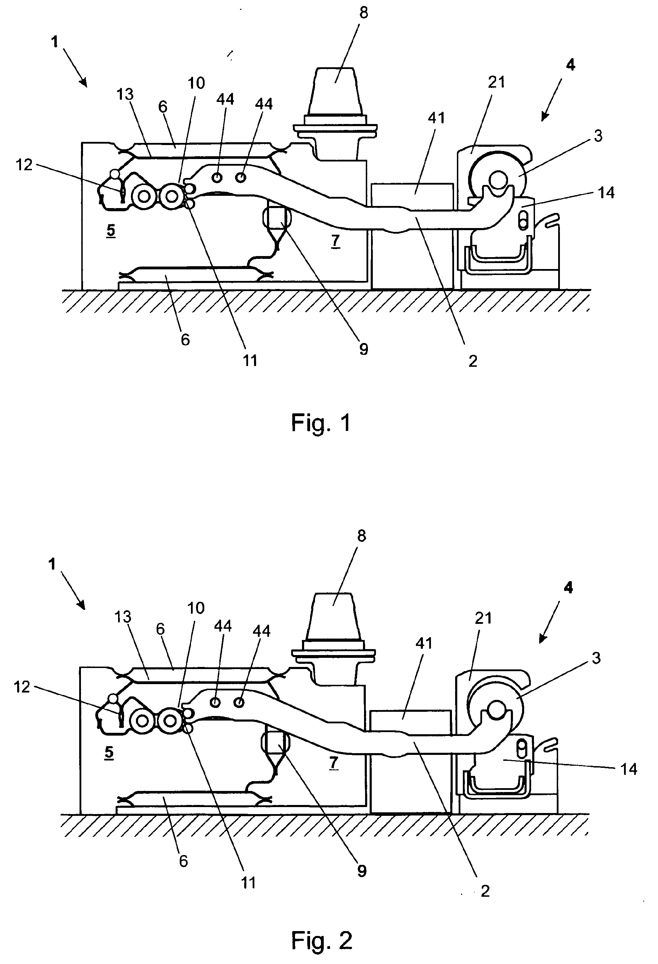

Die Figuren 1 und 2 zeigen beide eine Seitenansicht einer im Stand der Technik beschriebenen Kalibriergewichtsanordnung 4 und deren Position in Relation zu einer Kraftübertragungsvorrichtung 1 einer Kraftmesszelle z. B. in einer elektronischen Waage. Die Kalibriergewichtsanordnung 4 in Figur 1 befindet sich in ihrer Ruheposition und in Figur 2 ist die Situation während einer Kalibrierung dargestellt. Die Kraftübertragungsvorrichtung 1 weist eine Parallelführung mit einem feststehenden Parallelogrammschenkel 5 und einem über zwei Parallelogrammlenker 6 an diesen angelenkten beweglichen Parallelogrammschenkel 7 auf. Letzterer ist über den Konus 8 mit einer hier nicht gezeigten Waagschale verbunden und ist durch Belastung derselben gegenüber dem feststehenden Parallelogrammschenkel 5 in Richtung der Schwerkraft auslenkbar. Die Kraftübertragungsvorrichtung 1 weist ein erstes Koppelelement 9 auf, das eine in den beweglichen Parallelogrammschenkel 7 eingeleitete Kraft auf ein Hebelwerk überträgt. In der gezeigten Kraftübertragungsvorrichtung 1 besitzt das Hebelwerk einen ersten der Kraftuntersetzung dienenden Hebel 10, der über ein zweites Koppelelement 12 mit einem zweiten Hebel 11 verbunden ist. Das erste bzw. zweite Koppelelement 9, 12 greift über Dünnstellenbiegelager am ersten bzw. zweiten Hebel 10, 11 an.

Eine Auslenkung des beweglichen Parallelogrammschenkels 7 in Richtung der Schwerkraft bewirkt eine Kraftübertragung auf das Hebelwerk, welches die Kraft untersetzt und an ein hier nicht detailliert dargestelltes, häufig elektromagnetisches Kraftkompensationssystem 41 weiterleitet.

Die Parallelführung 5, 6, 7, das erste und zweite Koppelelement 9, 12 und der erste und zweite Hebel 10, 11 sind in dem im wesentlichen quaderförmigen Materialblock derart ausgebildet, dass dessen Materialbereiche durch materialfreie Bereiche in Form von dünnen, den Materialblock senkrecht zu seiner ausgedehnten Fläche durchsetzenden Schnittlinien 13 voneinander getrennt sind. Die Schnittlinien 13 werden bevorzugt mittels Funkenerosion erzeugt.

Der Hebel 10 ist mit Durchgangsbohrungen versehen, an denen mittels geeigneter Befestigungsmittel 44 zwei Kalibriergewichtsträger 2 als Verlängerung des kürzeren, eingangsseitigen Hebelarms des ersten Hebels 10 angebracht sind. Der zweite Kalibriergewichtsträger 2 ist parallel zum ersten auf der gegenüberliegenden Seite der Kraftübertragungsvorrichtung 1 angeordnet und ist in dieser Darstellung verdeckt.

Wie in Figur 1 zu erkennen, ruht das Kalibriergewicht 3 während eines Wiegevorgangs auf einer Kalibriergewichtsauflage 14 und wird gegen die als Parkbügel ausgestalteten Seitenteile 21 der Kalibriergewichtsanordnung gepresst. Zur besseren Übersicht wurde in dieser Ansicht, wie auch in Figur 2 das vordere Seitenteil weggelassen. Das Kalibriergewicht 3 ist in der Ruheposition vollständig vom Hebelwerk der Kraftübertragungsvorrichtung entkoppelt.

Für eine Kalibrierung wird das Kalibriergewicht mittels eines Transfermechanismus auf die beiden Kalibriergewichtsträger 2 abgesenkt und so in Kraftkontakt mit dem Hebelwerk gebracht, siehe Figur 2. Das Kalibriergewicht 3 ruht hier vollständig auf dem Kalibriergewichtsträger 2 und hat keinen Kontakt mehr zur Kalibriergewichtsauflage 14. Der Transfermechanismus wird in dieser Ansicht durch die Kalibriergewichtsauflage 14 verdeckt. Der Transfermechanismus weist ein Hebeelement und einen Antrieb auf, wobei als Hebeelement häufig ein Exzenter eingesetzt wird, welcher über einen handelsüblichen Servomotor (hier nicht dargestellt) angetrieben wird. Der Antrieb ist im Allgemeinen neben der Kalibriergewichtsanordnung angeordnet, bezogen auf die Darstellungen vor oder hinter der Zeichnungsebene.

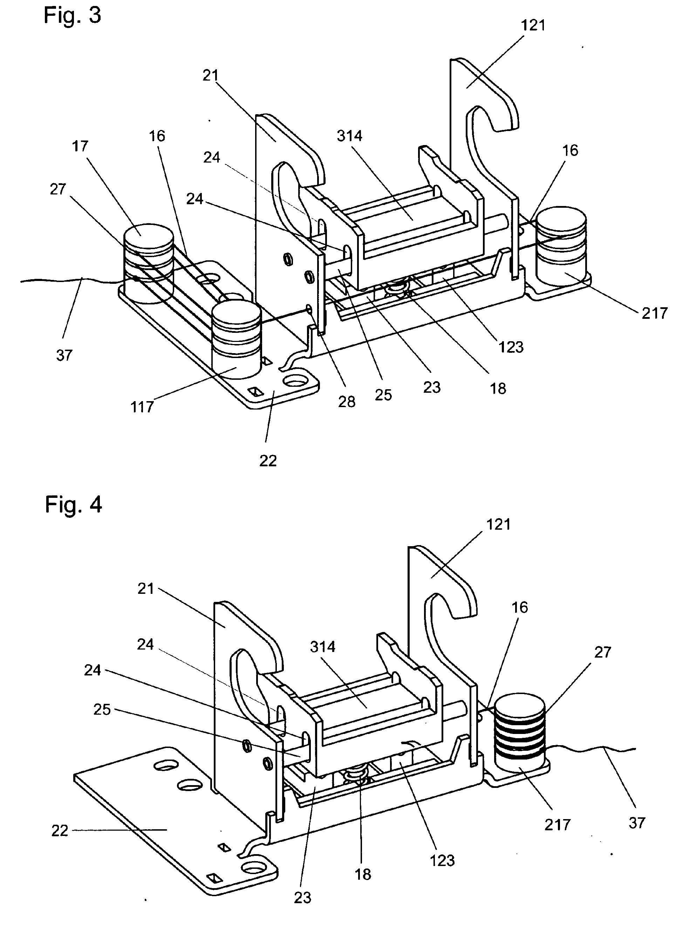

Figur 3 zeigt eine perspektivische Darstellung einer Kalibriergewichtsanordnung mit einem SMA-Draht 16 als Teil des Aktuators. Die Kalibriergewichtsanordnung ist auf einer Grundplatte 22 angeordnet und umfasst im Wesentlichen zwei als Parkbügel ausgestaltete Seitenteile 21, 121, einen aus einem Hebeelement 23, 123 und einem als Schraubendruckfeder ausgestaltetem Rückstellelement 18 bestehenden Transfermechanismus, eine Kalibriergewichtsauflage 314, drei Umlenkrollen 17, 117, 217 und einen als Aktuator wirkenden SMA-Draht 16 mit einer angedeuteten Anschlussmöglichkeit 37 für eine elektrische Heizvorrichtung. Die beiden als Parkbügel ausgestalteten Seitenteile 21, 121 der Kalibriergewichtsanordnung fixieren das Kalibriergewicht (s. Figuren 1, 2) in dessen Ruheposition. Zur Aufnahme des Kalibriergewichts weisen die Seitenteile 21, 121 etwa kreisförmige Aussparungen auf. In seiner Ruheposition ruht das Kalibriergewicht auf der Kalibriergewichtsauflage 314 und wird durch die Kraft der Rückstellfeder 18 gegen die Parkbügel 21, 121 gepresst, wodurch es gegen ein Herausspringen bei einem Fall oder Schlag geschützt ist.

Die Kalibriergewichtsauflage 314 ist mit dem Hebeelement 23, 123 fest verbunden und wird durch zwei an den Seitenteilen 21, 121 befestigte Führungsstangen 25, welche durch zwei Langlöcher 24 in der Kalibriergewichtsauflage 314 hindurch führen, vertikal geführt. Die Langlöcher 24 bestimmen den maximalen vertikalen Verschiebeweg der Kalibriergewichtsauflage 314 und dienen zusätzlich als Sicherung gegen ein mögliches Verkippen derselben.

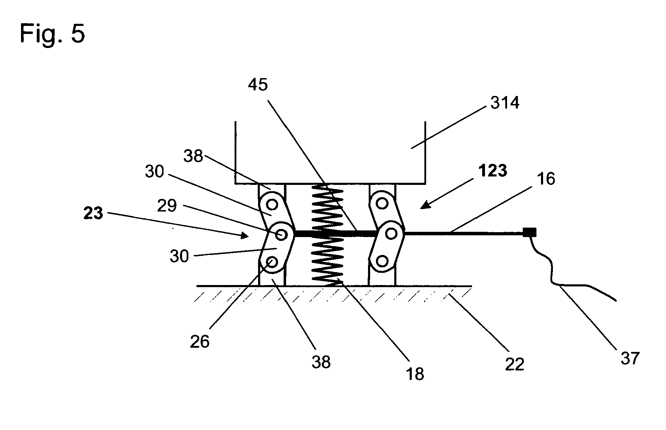

Die Kalibriergewichtsauflage 314 wird durch die Hebeelemente 23, 123 und/oder die Rückstellfeder 18 vertikal bewegt. Die Hebeelemente 23, 123 sind in Form von zwei Kniegelenken ausgestaltet, welche über mindestens ein Kniegelenk 23, 123 mit dem einen SMA-Draht 16 umfassenden Aktuator verbunden sind. Die Kniegelenke 23, 123 sind in Figur 5 genauer dargestellt. Prinzipiell handelt es sich dabei um jeweils zwei gelenkartig miteinander verbundene Formteile. Wirkt am Gelenk eine horizontale Kraft, so knickt das Gelenk ein, in dem hier dargestellten Ausführungsbeispiel in Richtung des Seitenteils 121, wodurch die auf den als Kniegelenke ausgestalteten Hebeelementen 23, 123 befestigte Kalibriergewichtsauflage 314 eine durch die Langlöcher 24 und die Führungsstangen 25 gesteuerte vertikale Abwärtsbewegung erfährt.

In dem hier vorgestellten Ausführungsbeispiel ist der SMA-Draht 16 direkt an einem Gelenk des Kniegelenks 123 befestigt, welcher wiederum mit dem Kniegelenk 23 verbunden ist. Der als Aktuator fungierende Draht 16 besteht aus einer Formgedächtnislegierung, welche sich bei einer Temperaturerhöhung über die Phasenübergangstemperatur der Formgedächtnislegierung hinaus aufgrund des Phasenübergangs von einer Martensitphase in eine Austenitphase verkürzt. Der SMA-Draht 16 wird durch eine an einem Ende des Drahts angeschlossene und hier nur angedeutete Anschlussmöglichkeit 37 für eine elektrische Heizvorrichtung, beispielsweise eine Stromquelle, verbunden und so erwärmt. Die zweite elektrische Leitung, die für einen geschlossenen Stromkreis notwendig ist, wird am anderen Ende des Drahtes angebracht und wird in diesem Ausführungsbeispiel von der Kalibriergewichtsauflage 314 und dem Seitenteil 121 verdeckt. Zur Vereinfachung wird in den folgenden Figuren und Ausführungsbeispielen nur die Anschlussmöglichkeit für eine elektrische Heizvorrichtung, beispielsweise eine Stromquelle, dargestellt. Im Fall der Stromquelle wird die Erdung an geeigneter Stelle am der Zuleitung entgegen gesetzten Ende des SMA-Drahts angebracht.

Die in diesem Ausführungsbeispiel verwendete Formgedächtnislegierung ist eine Nickel-Titan-Legierung, welche sich als Draht mit einem Durchmesser von etwa 150 µm bei einer Temperaturerhöhung im Bereich ihrer Phasenübergangstemperatur um ca. 4 % verkürzt. Um eine für das Abknicken der Kniegelenke 23, 123 ausreichende Kraft zu erzeugen, wird ein Draht 16 aus der Nickel-Titan-Legierung mit einer Länge von etwa 100 mm eingesetzt. Damit ergibt sich ein Zugweg von etwa 4 mm.

Zur optimalen Raumausnützung und Kraftübertragung wird der Draht 16 über mindestens eine Rolle, in diesem Ausführungsbeispiel drei Umlenkollen 17, 117, 217 umgelenkt. Es befinden sich zwei säulenartig gestaltete Rollen 17, 117 auf der einen Schmalseite der Kalibriergewichtsanordnung und eine weitere, gleichgestaltete Rolle 217 auf der anderen Schmalseite. Die Rollen, welche drehbar gelagert sind, weisen mindestens einen ringförmig umlaufenden Einschnitt 27 auf, durch welchen der SMA-Draht 16 parallel zur Grundplatte 22 geführt wird. In diesem Ausführungsbeispiel bestehen die Rollen aus Teflon. Teflon ist elektrisch und thermisch nicht leitend und weist bei entsprechender Bearbeitung eine sehr glatte Oberfläche auf, so dass der SMA-Draht nahezu abriebfrei geführt wird. Weiterhin ermöglicht Teflon eine gleitende Führung des SMA-Drahts. In Figur 3 weisen die Rollen 17, 117, 217 jeweils drei Einschnitte 27 auf, durch die der SMA-Draht 16 zumindest teilweise geführt wird.

Der SMA-Draht 16 ist an der Rolle 17 befestigt und verläuft von dort aus weiter über die Rolle 117 zurück zur Rolle 17 und wird noch einmal über die beide Rollen 17 und 117 umgelenkt, bevor der Draht durch zwei Löcher 28 (nur eines ist zu sehen) in den Seitenteilen 21, 121 der Kalibriergewichtsanordnung zur dritten Rolle 217 auf der anderen Seite der Kalibriergewichtsanordnung geführt wird. Die Rolle 217 lenkt den Draht 16 um, so dass er durch ein weiteres Loch (hier nicht zu sehen) zum Hebeelement 123 geführt wird. Am Hebeelement 123 ist das andere Ende des Drahts 16 befestigt. Solange der Draht 16 mit Strom beaufschlagt wird, ist dieser in Bezug auf seine ursprüngliche Länge verkürzt und übt eine Kraft auf die Hebeelemente 23, 123 aus, so dass diese eine vertikale Abwärtsbewegung der Kalibriergewichtsauflage 314 bewirken. Dabei muss die durch die Verkürzung des SMA-Drahts 16 erzeugte Kraft zusammen mit den Gewichtskräften der Kalibriergewichtsauflage 314 und des Kalibriergewichts der Federkraft der Rückstellfeder 18 entgegenwirken. Das Kalibriergewicht wird dabei auf zwei Kalibriergewichtsträger, siehe Figur 1 oder 2, abgesenkt, welche jeweils zwischen der Kalibriergewichtsauflage 314 und den Seitenteilen 21, 121 angeordnet sind. Um die Kalibriergewichtsauflage 314 wieder in ihre Ruheposition zu bewegen, wird der Wärmefluss zum Draht 16 hin unterbrochen. Der Draht 16 kühlt ab, transformiert in seine formbarere Martensitphase und verlängert sich wieder. Dadurch nimmt die auf die Hebeelemente 23, 123 wirkende Kraft ab und die Kalibriergewichtsauflage 314 wird aufgrund der Federkraft der Rückstellfeder 18 wieder nach oben in ihre Ruheposition bewegt. Die Rückstellfeder wirkt dabei entgegen der verbleibenden Zugkraft des erkaltenden SMA-Drahts 16 und der Gewichtskräfte der Kalibriergewichtsauflage 314 und des Kalibriergewichts. Gleichzeitig wirkt die Kraft der Rückstellfeder 18 über die Streckung der Kniegelenke 23, 123 auf den erkaltenden SMA-Draht 16 und bewirkt, dass dieser wieder auf seine ursprüngliche Länge gestreckt wird.

Figur 4 zeigt im Wesentlichen die gleiche Kalibriergewichtsanordnung wie Figur 3, mit gleichen Bezugszeichen für die gleichen Teile, allerdings mit einer alternativen Führung des SMA-Drahts 16. Der SMA-Draht 16 ist ebenfalls mit dem Kniegelenk 123 verbunden, allerdings wird er nur über eine einzige säulenartige Rolle 217 gelenkt. Das eine Ende des Drahts 16 ist am Kniegelenk 123 befestigt, das andere an der Rolle 217. In diesem Ausführungsbeispiel sind die Einschnitte 27 miteinander verbunden und bilden eine Art spiralförmigen Einschnitt, welcher die Säule umläuft. Zum Beheizen des SMA-Drahts 16 ist wiederum eine Anschlussmöglichkeit 37 für eine elektrische Heizvorrichtung vorhanden.

Das Funktionsprinzip des als Kniegelenk ausgestalteten Hebeelements wird durch Figur 5 verdeutlicht, welche schematisch einen eine Kalibriergewichtsauflage 314, zwei Kniegelenke 23, 123, eine Rückstellfeder 18 und einen SMA-Draht 16 als Teil des Aktuators umfassenden Transfermechanismus zeigt. Jedes Kniegelenk 23, 123 besteht aus zwei gelenkartig miteinander verbundenen Formteilen 30. Die Formteile 30 werden mit geeigneten Verbindungsmitteln 29, wie z. B. Nieten oder Stangen, miteinander und über weitere gleichartige Verbindungsmittel 26 mit Zwischenstücken 38 verbunden. Die Zwischenstücke 38 sind wiederum an der Kalibriergewichtsauflage 314 bzw. der Grundplatte 22 befestigt. Die Verbindungsmittel 26, 29 sind dergestalt, dass sie eine Drehbewegung der Formteile gegeneinander zulassen, so dass das komplette Kniegelenk 23, 123 analog zu einem Gelenk einknicken oder sich wieder aufrichten kann. Damit beide Kniegelenke 23, 123 die gleiche Bewegung ausführen, sind sie über ein starres Verbindungsmittel 45 miteinander verbunden. Das Verbindungsmittel 45 kann beispielsweise als Stange oder Stab ausgestaltet sein. Die Bewegungsrichtung für eine Bewegung von der Ruheposition in die Kalibrierposition ist durch die eingeknickten Kniegelenke 23, 123 in Figur 5 angedeutet. Die Formteile 30 des Kniegelenks 23, 123 sind entweder so lang, dass sie senkrecht zur Zeichenebene über die komplette Tiefe der Kalibriergewichtauflage 314 reichen, oder umfassen mindestens vier dünne Formteilen 30, von denen jeweils zwei durch z. B. eine Stange verbunden sind. Zwischen den Kniegelenken 23, 123 ist die Rückstellfeder 18 angeordnet, welche ihrerseits mit der Grundplatte 22 und der Kalibriergewichtsauflage 314 verbunden ist. Die Funktionsweise der Rückstellfeder 18 wurde oben bereits beschrieben. Der SMA-Draht 16 ist mit mindestens einem Kniegelenk 23, 123 verbunden, so dass eine durch eine Temperaturerhöhung verursachte Verkürzung des SMA-Drahts 16 eine Kraft auf die miteinander verbundenen Kniegelenke 23, 123 ausübt und ein Zusammenfalten beider Kniegelenk 23, 123 bewirkt, was wiederum eine vertikale Abwärtsbewegung der Kalibriergewichtsauflage 314 verursacht.

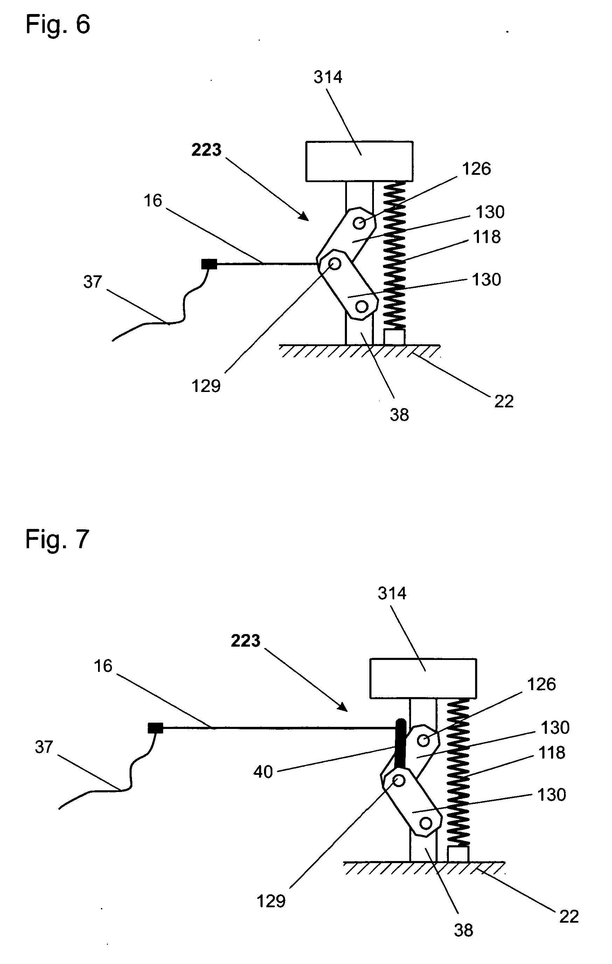

Es ist auch möglich, das ein mindestens ein Kniegelenk umfassendes Hebeelement so anzuordnen, wie in den Figuren 6 und 7 in einer Seitenansicht dargestellt ist. Die Gelenkachsen des Kniegelenks sind in beiden Figuren parallel zur Kalibriergewichtsachse angeordnet. Der Aufbau des Kniegelenks 223 entspricht dem aus Figur 5, wobei die das Kniegelenk bildenden Formteile 130 entweder durchgängig gestaltet sind, also in diesem Ausführungsbeispiel nahezu die komplette Breite der Kalibriergewichtsauflage 314 einnehmen, oder wiederum scheibenförmig ausgebildet und mit geeigneten Verbindungsmitteln 126, 129, wie z. B. Stangen oder Nieten, drehbar verbunden sind. Bei einer scheibenförmigen Ausgestaltung der Kniegelenke 223, sind zwei Kniegelenke 223 beispielsweise durch Verbindungsmittel 126, 129 wie Stangen miteinander verbunden, wobei die Stangen in etwa die Länge haben, die ungefähr der Breite der Kalibriergewichtsauflage 314 entspricht. Der SMA-Draht 16 ist, wie auch in Figur 5 gezeigt, zwischen den beiden Formteilen 130, vorzugsweise am Verbindungsmittel 129 befestigt und bewirkt aufgrund einer durch eine Temperaturerhöhung hervorgerufene Verkürzung des SMA-Drahts einen Zug auf das Kniegelenk 223, so dass dieses in dem durch das Verbindungsmittel 129 und die beiden Formteile 130 gebildeten Gelenk zusammenknickt und dadurch eine vertikale Verschiebung der Kalibriergewichtsauflage 314 bewirkt, wie es hier dargestellt ist. Auch dieser Transfermechanismus umfasst ein Rückstellelement 118, welches hier in Form einer Schraubendruckfeder zwischen einer Grundplatte 22 und der Kalibriergewichtsauflage 314 befestigt ist. Die Funktion des Rückstellelements 118 entspricht der bereits beschriebenen.

Der SMA-Draht kann entweder direkt am Kniegelenk befestigt sein, wie in den bisher beschriebenen Ausführungsbeispielen, oder über einen am Kniegelenk befestigten Hebel oder eine Rolle umgelenkt werden. Figur 7 zeigt im Wesentlichen den Transfermechanismus aus Figur 6 mit einer alternativen Angriffsmöglichkeit für den einen SMA-Draht 16 umfassenden Antrieb. Der SMA-Draht 16 ist an einem Hebel 40 befestigt, welcher fest mit dem bezogen auf die Zeichnung mittleren Verbindungsmittel 129 verbunden ist. Wird eine Zugkraft auf den Hebel ausgeübt, so bewirkt dies ein Einknicken der Kniegelenke 223, wie es in Figur 6 und 7 dargestellt ist. Der Hebel 40 kann entweder fest mit dem mittleren Verbindungsmittel 129 oder dem unteren Ende eines der beiden Formteile 130 verbunden sein. Es ist auch denkbar, die Zugkraft des SMA-Drahts 16 anstatt über den Hebel 40 über eine am Kniegelenk befestigte Rolle umzulenken.

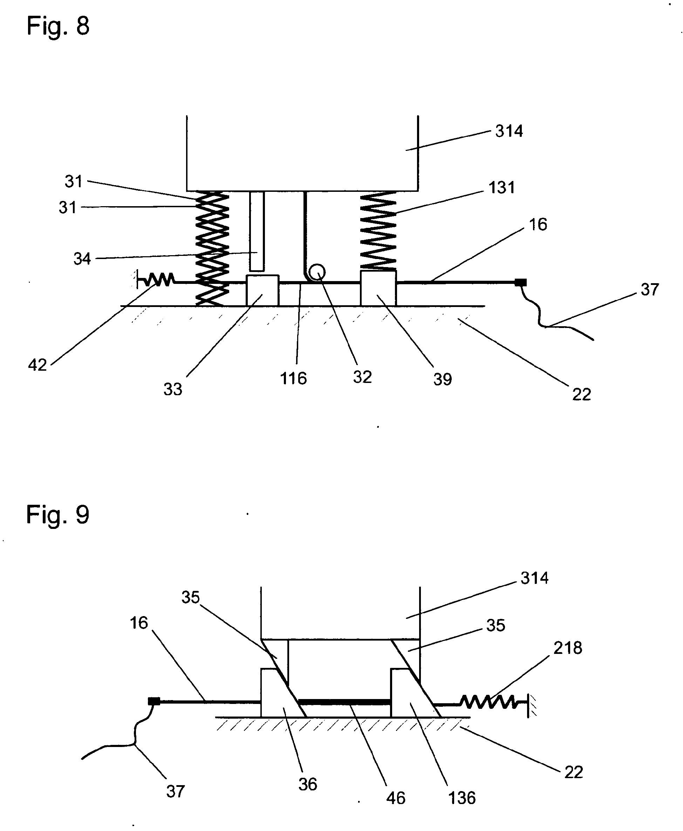

Neben den bereits beschriebenen Kniegelenken kann eine Kalibriergewichtsanordnung auch andere Transfermechanismen und/oder Hebeelemente umfassen, wie sie in den Figuren 8 bis 11 dargestellt sind.

Figur 8 zeigt eine Kalibriergewichtsanordnung in einer schematischen Frontalansicht, mit einem als Federpaket ausgestalteten Hebeelement. Die Kalibriergewichtsauflage 314 liegt auf mindestens zwei Schraubendruckfedern, hier sind drei Schraubendruckfedern 31, 131 im Dreieck angeordnet. Die Schraubendruckfeder 131 ist mittig unter der einen Hälfte der Kalibriergewichtsauflage 314 angeordnet und in diesem Ausführungsbeispiel im Gegensatz zu den Federn 31 nicht direkt auf der Grundplatte 22 befestigt, sondern stützt sich auf einer Art Sockel 39 ab. Aufgrund dieser Anordnung der drei Schraubendruckfedern 31, 131 ist die Kippneigung der Kalibriergewichtsauflage 314 vermindert. Die Federkraft dieser Federn 31, 131 reicht aus, um der Gewichtskraft des Kalibriergewichts und der Kalibriergewichtsauflage 314 entgegenzuwirken.

Der SMA-Draht 16 ist in diesem Ausführungsbeispiel direkt mit der Kalibriergewichtsauflage 314 verbunden und wird über eine Rolle 32 umgelenkt. Ein zweiter bis zur Umlenkrolle 32 parallel zum ersten geführter Draht 116 ist mit einem bewegbaren Schieber 33 verbunden. Der Schieber 33 hat im Ruhezustand Kontakt mit einem Überlastbolzen 34 und fixiert so die Lage der Kalibriergewichtsauflage 314. Beim Aufheizen der Drähte 16, 116 über die angedeutete Anschlussmöglichkeit 37 für eine elektrische Heizvorrichtung verkürzt sich der SMA-Draht 16 und zieht die Kalibriergewichtsauflage 14 gegen die Kraft der Federn 31, 131 nach unten. Gleichzeitig verkürzt sich auch der zweite Draht 116 und zieht den Schieber 33 zur Seite, so dass der Überlastbolzen 34 entsichert wird. Die maximale vertikale Auslenkung der Kalibriergewichtsauflage ist somit durch den Abstand zwischen dem Überlastbolzen 34 und der Grundplatte 22 gegeben.

Das als Hebeelement eingesetzte Federpaket, wird durch die Zugkraft des erwärmten Drahts 16 gespannt. Nach der Kalibrierung, wird die Heizvorrichtung abgestellt, der Draht 16 kühlt ab und wird wieder formbarer. Die Federn 31, 131 entspannen sich wieder, bewegen die Kalibriergewichtsauflage 314 in ihre Ruheposition und üben eine Kraft auf den erkaltenden SMA-Draht 16 aus, so dass dieser wieder auf seine ursprüngliche Länge gedehnt wird. Das Federpaket wirkt somit sowohl als Hebe- als auch als Rückstellelement. Der Schieber 33 wird durch die Kraft einer weiteren Rückstellfeder 42 wieder unter den Überlastbolzen 34 gezogen, die auch der am Schieber 33 befestigte Draht 116 wieder zu seiner ursprünglichen Länge gestreckt. Die Rückstellfeder 42 ist derart befestigt, dass sie keinen Kontakt mit den Schraubendruckfedern 31 hat.

Es ist auch möglich, dass die das Federpakte bildenden Schraubendruckfedern 31, 131 gleichzeitig die Funktion des Rückstellelements übernehmen. Dazu wird bezogen auf Figur 8 die Position von Anschlag 34 und der Umlenkrolle 32 vertauscht. In diesem Fall wird der Schieber 33 aufgrund der Verkürzung bzw. Verlängerung des SMA-Drahts 16 bewegt. Der zweite SMA-Draht 116 sowie die Rückstellfeder 42 werden überflüssig.

Der aus der EP 0 468 159 B1 bekannte, Keile als Hebeelement umfassende Transfermechanismus kann ebenfalls zusammen mit einer elektrischen Heizvorrichtung mit einem SMA-Draht als Aktuator bewegt werden. Figur 9 zeigt eine Frontalansicht eines Keile aufweisenden Transfermechanismus. Die Kalibriergewichtsauflage 314 wird durch sich paarweise gegeneinander verschiebende Keile 35, 36, 136 vertikal bewegt. Die beiden unteren Keile 36, 136 sind über ein starres Verbindungselement 46 fest miteinander verbunden. Beim Einsatz einer Formgedächtnislegierung als Aktuator in Form eines Drahts 16, wird dieser mit einem der beiden unteren Keilen 36, 136 verbunden. Eine Temperaturerhöhung im Bereich der Phasenübergangstemperatur bewirkt eine Verkürzung des SMA-Drahts 16, welcher über eine an einem Ende des Drahts angelegte elektrische Heizvorrichtung (hier nur als Anschlussmöglichkeit 37 angedeutet) erwärmt wird. Die durch die Verkürzung des SMA-Drahts 16 freigesetzte Energie bewirkt eine horizontale Bewegung der Keile 36, 136, bezogen auf Figur 9 bewegen sich die Keile 36, 136 nach links. Gleichzeitig gleiten die beiden oberen Keile 35 auf ihren Kontaktflächen zu den Keilen 36, 136 nach unten, wodurch auch die mit den oberen Keilen 35 verbundene Kalibriergewichtsauflage 314 abgesenkt wird. Die Länge des SMA-Drahts 16 wird dabei so gewählt, dass dieser unter Temperaturerhöhung in der Lage ist, die unteren Keile gegen die Rückstellkraft der Rückstellfeder 218, welche am Keil 136 befestigt ist, zu bewegen. Die Rückstellfeder 218 dient wiederum dazu, die Keile 35, 36, 136 in ihre Ruheposition zu bewegen und den nach der Kalibrierung wieder erkaltenden SMA-Draht 16 auf seine ursprüngliche Länge zu dehnen.

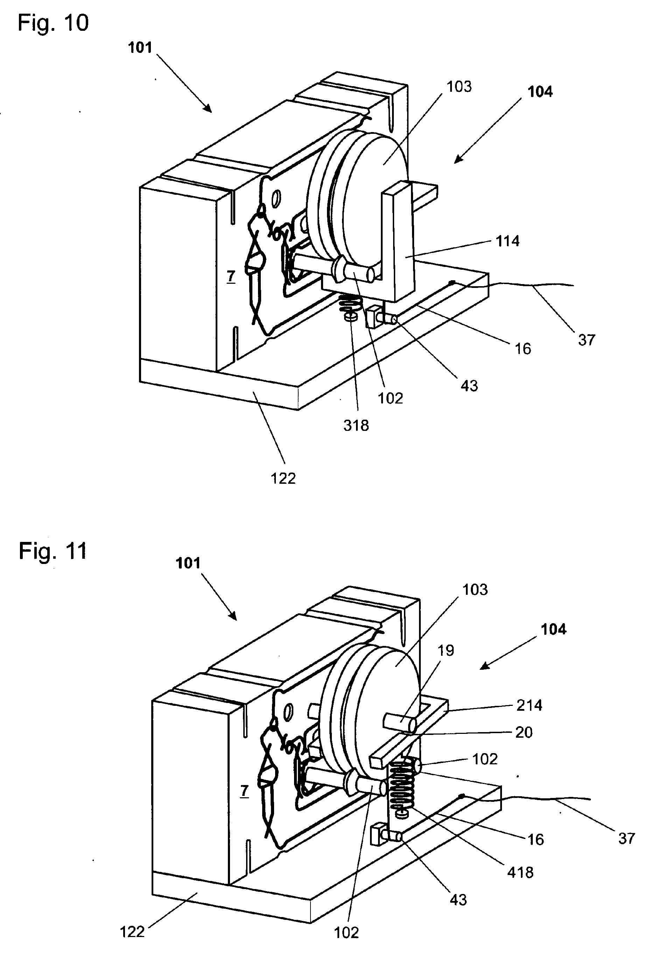

Eine weitere Ausführungsform für eine Kombination von Kalibriergewichtsanordnung 104 und Kraftübertragungsvorrichtung 101 ist in der EP 0 789 232 B1 offenbart. Die Figuren 10 und 11 zeigen diese Kombination in perspektivischer Darstellung zusammen mit einem einen SMA-Draht aufweisenden Aktuator. In Figur 10 sind zwei Kalibriergewichte 103, von denen nur eines zu sehen ist, seitlich an der einstückigen Kraftübertragungsvorrichtung 101 angeordnet. In der Ruhestellung liegt das Kalibriergewicht 103 vollständig auf einer Kalibriergewichtsauflage 114, welche am feststehenden Teil der Kraftübertragungsvorrichtung 101 befestigt ist, ohne in das Hebelwerk der Kraftübertragungsvorrichtung 101 einzugreifen. Für eine Kalibrierung wird das Kalibriergewicht 103 durch eine Abwärtsbewegung der Kalibriergewichtsauflage 114 auf zwei Kalibriergewichtsträger 102 (nur einer ist zu sehen), welche in das Hebelwerk der Kraftübertragungsvorrichtung 101 eingreifen, gelegt und so in Kraftkontakt mit dem Hebelwerk gebracht. Eingeleitet wird die Bewegung der Kalibriergewichtsauflage 114 durch ein elektrisches Aufheizen des unten an der Auflage 114 angreifenden SMA-Drahts 16. Die Anschlussmöglichkeit 37 für die elektrische Heizvorrichtung ist hier nur angedeutet. Der Draht 16 wird über eine an der Grundplatte 122 befestigte Rolle 43 umgelenkt und dann in Abhängigkeit des in der Kraftmesszelle der Waage vorhandenen Platzes weiter aufgewickelt und/oder umgelenkt. Nach erfolgreicher Kalibrierung wird die Stromzufuhr zum Draht 16 unterbrochen und die Kalibriergewichtsauflage 114 durch die Kraft einer Rückstellfeder 318 wieder in ihre Ruheposition gebracht. Dabei greift die Kalibriergewichtsauflage 114 unter das Kalibriergewicht 103, hebt dieses an und trennt so den Kraftkontakt zwischen dem Kalibriergewicht 103 und dem Kalibriergewichtsträger 102. Zusätzlich bewirkt die Rückstellfeder 318, dass der nach der Kalibrierung wieder erkaltende Draht 16 wieder zu seiner ursprünglichen Länge gedehnt wird.

In Figur 11 sind ebenfalls zwei Kalibriergewichte 103 seitlich an der Kraftübertragungsvorrichtung 101 angebracht. Das zweite Kalibriergewicht befindet sich auf der anderen Seite der Kraftübertragungsvorrichtung 101 und wird in dieser Perspektive verdeckt. Die Kalibriergewichtsanordnung 204 besteht hier aus einer als Gabel gestalteten Kalibriergewichtsauflage 214, welche am geschlossenen Ende der Gabel drehbar am feststehenden Teil der Kraftübertragungsvorrichtung 101 befestigt ist. Am offenen Ende auf der der Kraftübertragungsvorrichtung 101 abgewandten Seite der Gabel ist ein Ende eines SMA-Drahts 16 an der Kalibriergewichtsauflage 214 befestigt. Der SMA-Draht 16 wird über eine auf der Grundplatte 122 befestigten Rolle 43 umgelenkt und je nach Platzangebot in der Kraftmesszelle der Waage aufgewickelt und/oder mehrfach umgelenkt. Der SMA-Draht 16 ist an eine elektrische Heizvorrichtung, die hier nur als Anschlussmöglichkeit 37 angedeutet ist, angeschlossen und kann so beispielsweise über eine Beaufschlagung mit Strom beheizt werden. Durch die Erwärmung auf eine Temperatur oberhalb der Phasenübergangstemperatur verkürzt sich der SMA-Draht 16 und wirkt eine Zugkraft auf die Kalibriergewichtsauflage 214 aus, welche aufgrund der Krafteinwirkung nach unten kippt. Dadurch verliert das Kalibriergewicht 103, welches in seiner Ruhestellung durch einen Führungsstift 19 in einer Aussparung 20 der Kalibriergewichtsauflage 214 gehalten wird, den Kontakt zur Kalibriergewichtsauflage 214 und wird auf die beiden Kalibriergewichtsträger 102 abgesenkt, welche in das Hebelwerk der Kraftübertragungsvorrichtung 101 eingreifen. Aufgrund des so entstandenen Kraftkontakts zwischen dem Hebelwerk und dem Kalibriergewicht 103, kann eine Kalibrierung durchgeführt werden. Nach Beendigung der Kalibrierung wird der Stromfluss zum SMA-Draht 16 unterbrochen. Eine ebenfalls an der Kalibriergewichtsauflage 214 angreifende Rückstellfeder 418, welche neben dem SMA-Draht 16 und zwischen der Kalibriergewichtsauflage 214 und der Grundplatte 122 angeordnet ist, bewirkt, dass sich die Kalibriergewichtsauflage 214 wieder in ihre Ruheposition bewegt und dabei den Kraftkontakt zwischen den Kalibriergewichtsträgern 102 und dem Kalibriergewicht 103 trennt. Weiterhin hat die Rückstellfeder 418 die Aufgabe, den stromlosen, erkaltenden Draht in seine ursprüngliche Länge zu dehnen.

Die in den Ausführungsbeispielen gezeigten drahtartigen, zumindest teilweise aus einer Formgedächtnislegierung bestehenden Aktuatoren werden alle mit einer elektrischen Heizvorrichtung verbunden und so erwärmt. Überschreitet die Temperatur des Drahtes die Phasenübergangstemperatur der Formgedächtnislegierung so verkürzt sich dieser. Dieses Phänomen wird zur Funktionskontrolle der Kalibriergewichtsanordnung eingesetzt, indem der elektrische Widerstand des Drahtes mit bekannten Methoden gemessen wird. Der elektrische Widerstand eines Drahtes hängt von dessen Länge ab. Der Widerstandswert gibt an, welche Länge der Draht hat und damit auch, ob sich die Kalibriergewichtsanordnung in ihrer Ruheposition oder in ihrer Kalibrierposition befindet, da eine Bewegung des Transfermechanismus und damit des Kalibriergewichts mit einer Längenänderung des SMA-Drahts gekoppelt ist.

Der SMA-Draht kann wie z. B. in Figur 3 gezeigt über mehrere an den Schmalseiten der Kalibriergewichtsanordnung angeordnete Rollen umgelenkt werden, die Kalibriergewichtsanordnung ist allerdings nicht auf diese Art der Führung des SMA-Drahts beschränkt. Es wäre auch denkbar den Draht, über mindestens eine Rolle oder mindestens einen Hebel umzulenken, welche an einer der Breitseiten der Kalibrieranordnung oder in einem beliebigen Winkel zur Grundplatte der Kalibriergewichtsanordnung ausgerichtet ist. Da der SMA-Draht sehr flexibel ist, ist es möglich ihn, je nach Raumangebot in der Kraftesszelle einer Waage anzuordnen, zu wickeln und/oder umzulenken.

Der SMA-Draht wird, wie in den Ausführungsbeispielen zu sehen ist, über mindestens eine Rolle umgelenkt. Zur Optimierung der Kraftübertragung ist es möglich entweder einen Draht mehrfach umzulenken, so dass er beispielsweise eine Art Schlaufe bildet deren beide Enden an demselben Bauteil angreifen oder auch mehr als einen Draht zu verwenden, wobei die Drähte vorzugsweise parallel geführt werden. Neben Rollen können selbstverständlich auch andere Elemente, wie z. B. Hebel als Umlenkmittel, eingesetzt werden.

Der Aktuator besteht aus einer Formgedächtnislegierung, welche unter einer Temperaturveränderung in der Lage ist, zwischen einer Martensit- und einer Austenitphase zu transformieren. Es sind eine Vielzahl von Formgedächtnislegierungen bekannt. In den bevorzugten Ausführungsbeispielen wird der Aktuator vorzugweise aus einer Formgedächtnislegierung gebildet, dazu zählen u. a. Legierungen aus einer Gruppe bestehend aus NiTi₂, CuZn, CuZnAl, CuZnGa, CuZnSn, CuZnSi, CuAINi, CuAuZn, CuSn, AuCd, AgCd, NiAl und FePt. Vorzugsweise wird eine NiTi₂-Legierung verwendet, welche idealerweise ungefähr 50 % Nickel und eine Phasenübergangstemperatur von mindestens 90°C aufweist.

Die Länge des SMA-Drahts wird aufgrund der Zusammensetzung der Formgedächtnislegierung, der zu erzeugenden Kraft und der zu überwindenden Hubstrecke bestimmt. Ein SMA-Draht aus einer Nickel-Titan-Legierung mit ungefähr 50 % Nickel und einem Durchmesser von ca. 150 µm verkürzt sich beim Überschreiten der Phasenübergangstemperatur um etwa 4 %.

Die verwendete Formgedächtnislegierung zeichnet sich durch eine lange Lebensdauer aus. Ein daraus gestalteter Draht kann etwa 10 000 mal, vorzugsweise mindestens 100 000 mal erwärmt und abgekühlt werden, ohne dass eine Materialermüdung eintritt.

In den Ausführungsbeispielen wird der Aktuator vorzugsweise als Draht gestaltet, da ein Draht die besten Widerstands- und Aufheizeigenschaften aufweist. Eine Ausgestaltung des Aktuators als flaches Band mit rundem, ovalem oder rechteckigem Durchmesser ist ebenfalls möglich.

Eine weitere Möglichkeit bietet die Materialeigenschaft des Formwandels, so ist es beispielsweise möglich, eine Formgedächtnislegierung in Form einer Schraubendruckfeder einzusetzen, welche bei entsprechender Führung der Bewegung, gleichzeitig die Funktion des Rückstellelements und des Hebeelements übernehmen kann.

Für eine Kalibrierung wird das Kalibriergewicht in Kraftkontakt mit einen mit dem Hebelwerk der Kraftübertragungsvorrichtung verbundenen Kalibriergewichtsträger gebracht. In den Ausführungsbeispielen geschieht dies durch eine vertikale Bewegung oder eine Kippbewegung des Kalibriergewichts. Aufgrund der Flexibilität des SMA-Drahts sind weitere Transfermechanismen realisierbar. So ist es denkbar, dass das Kalibriergewicht nach oben gezogen und dadurch der Kontakt zwischen Kalibriergewicht und Kalibriergewichtsträger gelöst wird oder dass der Antrieb eine Schiene zur Seite bewegt und so eine Arretierung des Kalibriergewichts aufhebt.

Die vorgestellten bevorzugten Ausführungsbeispiele zeigen die Kombination einer Kalibriergewichtsanordnung mit einer einstückigen Kraftübertragungsvorrichtung. Es sind andere Kraftübertragungsvorrichtungen bekannt, welche mit einer Kalibriergewichtsanordnung, wie sie in Figur 1 gezeigt wurde, kombiniert werden können. Jegliche derartige Kraftübertragungsvorrichtungen können selbstverständlich auch mit einer Kalibriergewichtsanordnung mit einem eine Formgedächtnislegierung aufweisenden Aktuator, wie sie in den Ausführungsbeispielen beschrieben wurden, kombiniert werden.

Kalibrieranordnungen der hier vorgestellten Art können sowohl in hochauflösenden als auch in weniger hochauflösenden Waagen eingesetzt werden.

### Bezugszeichenliste

- 1, 101: Kraftübertragungsvorrichtung
- 2, 102: Kalibriergewichtsträger
- 3, 103: Kalibriergewicht
- 4, 104, 204: Kalibriergewichtsanordnung
- 5: feststehender Parallelogrammschenkel
- 6: Parallelogrammlenker
- 7: beweglicher Parallelogrammschenkel
- 8: Konus
- 9: erstes Koppelelement
- 10: erster Hebel
- 11: zweiter Hebel
- 12: zweites Koppelelement
- 13: Schnittlinie
- 14, 114, 214, 314: Kalibriergewichtsauflage
- 16, 116: SMA-Draht
- 17,117,217: Umlenkrolle
- 18, 118, 218, 318, 418: Rückstellelement
- 19: Führungsstift
- 20: Aussparung
- 21, 121: als Parkbügel ausgestaltetes Seitenteil
- 22, 122: Grundplatte
- 23, 123, 223: Hebeelement
- 24: Langloch
- 25: Führungsstange
- 26, 126: Verbindungsmittel
- 27: Einschnitt
- 28: Loch im Seitenteil
- 29, 129: Verbindungsmittel
- 30, 130: Formteil
- 31, 131: Schraubendruckfeder
- 32: Umlenkrolle
- 33: Schieber
- 34: Überlastbolzen
- 35: Keil
- 36, 136: Keil
- 37: Anschlussmöglichkeit für elektrische Heizvorrichtung
- 38, 138: Zwischenstück
- 39: Sockel
- 40: Unlenkhebel
- 41: Kraftkompensationssystem
- 42: Rückstellfeder
- 43: Umlenkrolle
- 44: Befestigungsmittel
- 45: starres Verbindungselement
- 46: starres Verbindungselement

## Patentansprüche

1. Kalibriergewichtsanordnung (4,104,204) für eine eine Kraftübertragungsvorrichtung (1,101) aufweisende elektronische Waage, wobei die Kalibriergewichtsanordnung (4,104,204) mindestens ein mit der Kraftübertragungsvorrichtung (1,101) koppelbares Kalibriergewicht (3,103), einen Transfermechanismus und einen Antrieb zur geführten Bewegung des Kalibriergewichts (3,103) umfasst, **dadurch gekennzeichnet, dass** der Antrieb einen mit dem Transfermechanismus zusammenwirkenden und zumindest teilweise aus einer Formgedächtnislegierung bestehenden Aktuator (16) aufweist, welcher das Kalibriergewicht (3,103) mittels einer durch eine Temperaturänderung hervorgerufenen Strukturänderung der Formgedächtnislegierung bewegt.

2. Kalibriergewichtsanordnung nach Anspruch 1, **dadurch gekennzeichnet, dass** der Antrieb eine mit dem Aktuator (16) zusammenwirkende elektrische Heizvorrichtung aufweist.

3. Kalibriergewichtsanordnung nach Anspruch 1 oder 2, **dadurch gekennzeichnet, dass** der Transfermechanismus mindestens ein Rückstellelement und mindestens ein Hebeelement aufweist.

4. Kalibriergewichtsanordnung nach Anspruch 3, **dadurch gekennzeichnet, dass** der Transfermechanismus mindestens ein Element aufweist, welches die Funktionalitäten des Rückstellelements und des Hebeelements vereinigt.

5. Kalibriergewichtsanordnung nach einem der Ansprüche 3 oder 4, **dadurch gekennzeichnet, dass** das Rückstellelement eine Rückstellkraft aufweist, welche ausreicht, um den Transfermechanismus und das Kalibriergewicht (3, 103) in deren Ruhepositionen zu bewegen und zusätzlich die erkaltende Formgedächtnislegierung (16) ihre ursprüngliche Form bzw. Länge zu bringen.

6. Kalibriergewichtsanordnung nach einem der Ansprüche 3 bis 5, **dadurch gekennzeichnet, dass** das Rückstellelement mindestens eine Feder (18, 118, 218, .318, 418, 42) umfasst.

7. Kalibriergewichtsanordnung nach einem der Ansprüche 1 bis 6, **dadurch gekennzeichnet, dass** der zumindest teilweise aus einer Formgedächtnislegierung bestehende Aktuator (16) eine Sensorfunktionalität zur Funktionskontrolle des Transfermechanismus aufweist.

8. Kalibriergewichtsanordnung nach einem der Ansprüche 1 bis 7, **dadurch gekennzeichnet, dass** die Kraft des Aktuators (16) über mindestens ein Umlenkmittel (17, 117, 217, 32, 40, 43) umgelenkt wird.

9. Kalibriergewichtsanordnung nach Anspruch 8, **dadurch gekennzeichnet, dass** die Umlenkmittel Rollen (17, 117, 217, 32, 43) aus einem glatten, gleitenden Material, vorzugsweise Teflon, sind.

10. Kalibriergewichtsanordnung nach einem der Ansprüche 3 bis 9, **dadurch gekennzeichnet, dass** das Hebeelement des Transfermechanismus als sich paarweise gegeneinander verschiebende Keile (35, 135, 36) oder als mindestens ein Kniegelenk (23, 123, 223, 323) ausgestaltet ist.

11. Kalibriergewichtsanordnung nach einem der Ansprüche 3 bis 9, **dadurch gekennzeichnet, dass** das Hebeelement des Transfermechanismus als ein mindestens zwei Schraubendruckfedern (31, 131) umfassendes Federpaket ausgestaltet ist.

12. Kalibriergewichtsanordnung nach Anspruch 11, **dadurch gekennzeichnet, dass** die Federpakete (31, 131) des Hebeelements gleichzeitig das Rückstellelement bereitstellen.

13. Kalibriergewichtsanordnung nach einem der Ansprüche 1 bis 12, **dadurch gekennzeichnet, dass** die Formgedächtnislegierung aus der Gruppe bestehend aus NiTi₂, CuZn, CuZnAl, CuZnGa, CuZnSn, CuZnSi, CuAlNi, CuAuZn, CuSn, AuCd, AgCd, NiAl und FePt gewählt wird.

14. Kalibriergewichtsanordnung nach Anspruch 13, **dadurch gekennzeichnet dass** die Formgedächtnislegierung aus der Gruppe bestehend aus Nickel-Titan-Legierungen mit einem Nickel-Gehalt von mindestens 40 %, vorzugsweise etwa 50 %, und einer Phasenübergangstemperatur von mindestens 80°C und vorzugsweise mindestens 90°C gewählt wird.

15. Kalibriergewichtsanordnung nach einem der Ansprüche 1 bis 14, **dadurch gekennzeichnet, dass** der aus einer Formgedächtnislegierung bestehende Teil des Aktuators (16) als Draht ausgestaltet ist.

## Claims

1. Calibration weight arrangement (4, 104, 204) for an electronic balance which has a force-transmitting device (1, 101), said calibration weight arrangement (4, 104, 204) comprising at least one calibration weight (3, 103) capable of being coupled to the force-transmitting device (1, 101), further comprising a transfer mechanism and a drive source to effect a guided movement of the calibration weight (3, 103), **characterized in that** the drive source has an actuator (16) cooperating with the transfer mechanism and consisting at least in part of a shape memory alloy, wherein said actuator (16) moves the calibration weight (3, 103) by means of a structural change of the shape memory alloy, said structural change occurring as a result of a temperature change.

2. Calibration weight arrangement according to claim 1, **characterized in that** the drive source comprises an electrical heating device that cooperates with the actuator (16).

3. Calibration weight arrangement according to claim 1 or 2, **characterized in that** the transfer mechanism has at least one resetting element and at least one lifting element.

4. Calibration weight arrangement according to claim 3, **characterized in that** the transfer mechanism has at least one element capable of performing the combined functions of the resetting element and the lifting element.

5. Calibration weight arrangement according to one of the claims 3 or 4, **characterized in that** the resetting element has a resetting force of sufficient magnitude to move the transfer mechanism and the calibration weight (3, 103) to their respective rest positions and at the same time to return the shape memory alloy (16) during its cool-down phase to its original shape and/or length.

6. Calibration weight arrangement according to one of the claims 3 to 5, **characterized in that** the resetting element comprises at least one spring (18, 118, 218, 318, 418, 42).

7. Calibration weight arrangement according to one of the claims 1 to 6, **characterized in that** the actuator (16) which consists at least in part of a shape memory alloy has the capability to function as a sensor to perform a function check of the transfer mechanism.

8. Calibration weight arrangement according to one of the claims 1 to 7, **characterized in that** the force of the actuator (16) is made to change its direction by means of at least one direction-changing means (17, 117, 217, 32, 40, 43).

9. Calibration weight arrangement according to claim 8, **characterized in that** the direction-changing means are rollers (17, 117, 217, 32, 43) of a smooth, gliding material, preferably Teflon.

10. Calibration weight arrangement according to one of the claims 3 to 9, **characterized in that** the lifting element of the transfer mechanism is configured in the form of wedges (35, 135, 36) moving against each other in pairs or in the form of at least one knee-joint linkage (23, 123, 223, 323).

11. Calibration weight arrangement according to one of the claims 3 to 9, **characterized in that** the lifting element of the transfer mechanism is configured in the form of a arrangement of springs comprising at least two compressive coil springs (31, 131).

12. Calibration weight arrangement according to claim 11, **characterized in that** the spring sets (31, 131) of the lifting element simultaneously perform the function of the resetting element.

13. Calibration weight arrangement according to one of the claims 1 to 12, **characterized in that** the shape memory alloy is selected from the group consisting of NiTi₂, CuZn, CuZnAl, CuZnGa, CuZnSn, CuZnSi, CuAlNi, CuAuZn, CuSn, AuCd, AgCd, NiAl and FePt.

14. Calibration weight arrangement according to claim 13, **characterized in that** the shape memory alloy is selected from the group consisting of nickel-titanium alloys with a nickel content of at least 40%, preferably about 50%, and with a phase transition temperature of at least 80°C, preferably at least 90°C.

15. Calibration weight arrangement according to one of the claims 1 to 14, **characterized in that** the part of the actuator (16) that consists of a shape memory alloy is configured in wire form.

## Revendications

1. Dispositif de poids d'étalonnage (4, 104, 204) pour une balance électronique présentant un dispositif de transmission de force (1, 101), le dispositif de poids d'étalonnage (4, 104, 204) comprenant au moins un poids d'étalonnage (3, 103) pouvant être couplé avec le dispositif de transmission de force (1, 101), un mécanisme de transfert et un entraînement pour le mouvement guidé du poids d'étalonnage (3, 103), **caractérisé en ce que** l'entraînement comporte un actionneur (16) coopérant avec le mécanisme de transfert et à base au moins partiellement d'un alliage à mémoire de forme, lequel actionneur déplace le poids d'étalonnage (3, 103) au moyen d'une modification de structure, provoquée par une variation de température, de l'alliage à mémoire de forme.

2. Dispositif de poids d'étalonnage selon la revendication 1, **caractérisé en ce que** l'entraînement comporte un dispositif de chauffage électrique coopérant avec l'actionneur (16).

3. Dispositif de poids d'étalonnage selon la revendication 1 ou 2, **caractérisé en ce que** le mécanisme de transfert comporte au moins un élément de rappel et au moins un élément de levier.

4. Dispositif de poids d'étalonnage selon la revendication 3, **caractérisé en ce que** le mécanisme de transfert comporte au moins un élément qui relie les fonctionnalités de l'élément de rappel et de l'élément de levage.

5. Dispositif de poids d'étalonnage selon l'une quelconque des revendications 3 ou 4, **caractérisé en ce que** l'élément de rappel comporte une force de rappel qui suffit pour déplacer le mécanisme de transfert et le poids d'étalonnage (3, 103) dans leurs positions de repos et pour amener en supplément l'alliage à mémoire de forme (16) qui se refroidit dans sa forme ou sa longueur initiale.

6. Dispositif de poids d'étalonnage selon l'une quelconque des revendications 3 à 5, **caractérisé en ce que** l'élément de rappel comporte au moins un ressort (18, 118, 218, 318, 418, 42).

7. Dispositif de poids d'étalonnage selon l'une quelconque des revendications 1 à 6, **caractérisé en ce que** l'actionneur (16) à base au moins partiellement d'un alliage à mémoire de forme comporte une fonctionnalité de capteur pour le contrôle de fonction du mécanisme de transfert.

8. Dispositif de poids d'étalonnage selon l'une quelconque des revendications 1 à 7, **caractérisé en ce que** la force de l'actionneur (16) est déviée au moyen d'au moins un moyen de déviation (17, 117, 217, 32, 40, 43).

9. Dispositif de poids d'étalonnage selon la revendication 8, **caractérisé en ce que** les moyens de renvoi sont des rouleaux (17, 117, 217, 32, 43) à base d'un matériau lisse et glissant, de préférence du téflon.

10. Dispositif de poids d'étalonnage selon l'une quelconque des revendications 3 à 9, **caractérisé en ce que** l'élément de levage du mécanisme de transfert est conçu comme des clavettes (35, 135, 36) se déplaçant par paires les unes par rapport aux autres ou est conçu comme au moins une articulation de genouillère (23, 123, 223, 323).

11. Dispositif de poids d'étalonnage selon l'une quelconque des revendications 3 à 9, **caractérisé en ce que** l'élément de levage du mécanisme de transfert est conçu comme un ensemble ressort comprenant au moins deux ressorts de pression hélicoïdaux (31, 131).

12. Dispositif de poids d'étalonnage selon la revendication 11, **caractérisé en ce que** les ensembles ressort (31, 131) de l'élément de levage mettent à disposition en même temps l'élément de rappel.

13. Dispositif de poids d'étalonnage selon l'une quelconque des revendications 1 à 12, **caractérisé en ce que** l'alliage à mémoire de forme est choisi dans le groupe constitué de NiTi₂, CuZn, CuZnAl, CuZnGa, CuZnSn, CuZnSi, CuAlNi, CuAuZn, CuSn, AuCd, AgCd, NiAl et FePt.

14. Dispositif de poids d'étalonnage selon la revendication 13, **caractérisé en ce que** l'alliage à mémoire de forme est choisi dans le groupe comprenant des alliages nickel-titane avec une teneur en nickel d'au moins 40 %, de préférence environ 50 % et une température de transition de phase d'au moins 80°C et de préférence au moins 90°C.

15. Dispositif de poids d'étalonnage selon l'une quelconque des revendications 1 à 14, **caractérisé en ce que** la partie (16) à base d'un alliage à mémoire de forme est conçue comme fil.
